# EUROPÄISCHE PATENTANMELDUNG

(11) **EP 1 273 826 A2**
(43) Veröffentlichungstag der Anmeldung: **08.01.2003**
(21) Anmeldenummer: 02014585.0
(22) Anmeldetag: 02.07.2002
(51) Int. Cl.: F16H 7/12

(54) **Spannvorrichtung**

(30) Priorität: 07.07.2001 DE 10133157
(71) Anmelder: INA-Schaeffler KG, 91074 Herzogenaurach (DE)
(72) Erfinder: Graf, Herbert, 96120 Bischberg (DE); Kaiser, Jörg, 91475 Lonnerstadt (DE)

(57) **Zusammenfassung**

Die Erfindung betrifft eine Spannvorrichtung (1) für ein Zugmittel (11), umfassend eine ortsfest an einem Maschinenteil (8) befestigte Schildplatte (7), auf der ein gegen eine Federkraft begrenzt verdrehbarer Arbeitsexzenter (4) gelagert ist. Nach einer Vormontage der Spannvorrichtung (1) fixiert eine Arretiereinrichtung (20) den Arbeitsexzenter (4) gegenüber der Schildplatte (7). In einer Einbaulage begrenzt eine Sperre (25) den Schwenkbereich des Arbeitsexzenters (4).

## Beschreibung

### Gebiet der Erfindung

Die vorliegende Erfindung betrifft eine Spannvorrichtung für Zugmittel, insbesondere Riemen für einen Zugmitteltrieb. Derartige Spannvorrichtungen finden Anwendung für einen Aggregate- oder Steuerriemen-Zugmitteltrieb einer Brennkraftmaschine. Die Spannvorrichtung ist versehen mit einer ortsfest an einem Maschinenteil, beispielsweise dem Gehäuse einer Brennkraftmaschine, fixierten Schildplatte, an der ein Tragkörper drehstarr befestigt ist. Dabei dient der Tragkörper zur Aufnahme eines gegen eine Federkraft verschwenkbaren Arbeitsexzenters, dem eine an dem Zugmittel abgestützte Spannrolle zugeordnet ist.

### Hintergrund der Erfindung

Eine derartige Spannvorrichtung ist beispielsweise aus der US-A 4,832,665 bekannt, bei der die Spannrolle auf einem Exzenter wälzgelagert ist. Der Exzenter ist schwenkbar auf einem Tragkörper angeordnet, der an einem Maschinenteil, einem Motorgehäuse mittels einer Verschraubung befestigt ist. Eine den Exzenter umschließende Schraubenfeder ist einerseits an dem Maschinenteil und mit dem weiteren Ende an dem Exzenter derart abgestützt, dass der Exzenter mit der Spannrolle gegen das Zugmittel, einen Riemen, angefedert wird. Die Spannvorrichtung ist mit einem Sicherungsstift versehen, der die Spannfeder vor der Inbetriebnahme in einer vorgespannten Anordnung hält. Nach dem Anflanschen der Spannvorrichtung an dem Maschinenteil bzw. der Brennkraftmaschine wird der Sicherungsstift entfernt, so dass der Exzenter unter der Kraft der Spannfeder gegen das Zugmittel angefedert wird.

Die DE 40 15 028 A1 zeigt eine Spannvorrichtung, die einen Einstellexzenter und einen Arbeitsexzenter umfasst. Bei der Montage an der Brennkraftmaschine wird die Spannvorrichtung mittels eines durch eine exzentrisch angeordnete Befestigungsbohrung hindurchgeführten Bolzens zunächst lose verschraubt. Mit einem Verstellwerkzeug, eingesetzt in einen Innensechskant, wird die Spannvorrichtung gegen das Zugmittel geschwenkt. Während des Spannens bewirkt das Zugmittel eine Reaktionskraft auf die Spannvorrichtung. Bei weiterem Schwenken spannt sich die in der Spannvorrichtung eingesetzte Schraubenfeder und das Montageelement verschwenkt. Der Schwenkvorgang wird bis zu einer Überdeckung von zwei Kerben an dem Flansch und an einer Kunststoffscheibe fortgesetzt. In dieser Situation befindet sich ein Vorsprung in einer Ausnehmung des Schwenkbereichs des Spannarms. In dieser Voreinstellung wird der Bolzen festgeschraubt. Der Doppelexzenterspanner ist dann nachteilig, wenn der Einstellexzenter für die Voreinstellung so weit verschwenkt wird, d. h. keine Überdeckung der Kerben besteht. Wenn nun der Einstellexzenter zurückgeschwenkt wird, bis die beiden Kerben miteinander fluchten, befindet sich der Vorsprung nicht länger in der Mitte der genannten Ausnehmung, sondern versetzt dazu. Dieser Effekt tritt aufgrund einer inneren Reibung zwischen den Maschinenteilen während der Voreinstellung aufgrund eines Hysterese-Effektes auf. In diesem Fall hat der Stopper, der durch den Vorsprung und die Ausnehmung gebildet wird, eine andere Position, was sich unmittelbar auf den Schwenkbereich des Spannarms auswirkt. Der veränderte Schwenkbereich beeinflusst nachteilig Trumkräfte des Zugmittels, die von den vorbestimmten Werten abweichen.

### Zusammenfassung der Erfindung

Aufgabe der vorliegenden Erfindung ist es eine im Aufbau einfache Spannvorrichtung zu schaffen, die eine exakte, reproduzierbare Einbaulage zur Erzielung stets gleicher Trumkräfte in dem Zugmittel sicherstellt.

Die Problemstellung wird durch die in den Ansprüchen 1 und 14 aufgeführten Merkmale gelöst.

Gemäß Anspruch 1 ist die erfindungsgemäße Spannvorrichtung mit einer Arretiereinrichtung versehen, mit der nach erfolgter Vormontage der Arbeitsexzenter gegenüber der Schildplatte fixiert ist. Diese Maßnahme vereinfacht das Handling, die Montage der Spannvorrichtung und des Zugmittels, da der Arbeitsexzenter dabei eine Position einnimmt, die dem umgespannten Zugmittel entspricht. Weiterhin umfasst die erfindungsgemäße Spannvorrichtung eine Sperre, die den Schwenkbereich bzw. Verstellwinkel des Arbeitszylinders gegenüber der Schildplatte begrenzt. Die nach dem Lösen der Arretiereinrichtung wirksame Sperre beeinflusst den Freiheitsgrad, indem ein unzulässiger Schwenkbereich des Arbeitszylinders unterbunden wird. Die Auslegung der Sperre erfolgt so, dass der Arbeitsexzenter alle Positionen im Normalbetrieb des Zugmittels einnehmen kann, gleichzeitig aber Extremausschläge des Arbeitsexzenters verhindert. Die Erfindung unterbindet bei einem als Zahnriemen ausgebildeten Zugmittel wirkungsvoll einen Zahnsprung, der nachteilige Folgewirkungen, beispielsweise geänderten Steuerzeiten der Gaswechselventile einer Brennkraftmaschine auslösen kann.

Die erfindungsgemäße Spannvorrichtung umfasst eine Schildplatte, die im eingebauten Zustand der Spannvorrichtung ortsfest an einem Maschinenteil, vorzugsweise einem Gehäuse der Brennkraftmaschine fixiert ist. Eine Verstellung bzw. nachteilige Verdrehung der gesamten Spannvorrichtung beim Einschrauben der Befestigungsvorrichtung wird damit wirksam unterbunden. Gleichzeitig ermöglicht dieser Aufbau eine exakte, jederzeit reproduzierbare Einbaulage der Spannvorrichtung gegenüber dem Maschinenteil. Die erfindungsgemäße Spannvorrichtung ist damit für eine automatisierte Montage geeignet, da die Anlenk- bzw. Abstützpunkte der Spannvorrichtung exakt vorbestimmt sind. Die Erfindung gewährleistet eine Vorspannung des Zugmittels, die vorteilhaft weitestgehend mit einer vorbestimmten Zugmittelspannung übereinstimmt, was die Zuverlässigkeit des gesamten Zugmitteltriebs erhöht. Der einfache Aufbau der erfindungsgemäßen Spannvorrichtung in Verbindung mit der Montagevereinfachung hat einen bedeutenden Kostenvorteil zur Folge. Weiterhin kann die erfindungsgemäße Spannvorrichtung durch eine geringfügige Anpassung, an die Anlage- bzw. Abstützfläche des Maschinenteils, insbesondere dem Gehäuse einer Brennkraftmaschine in eine Serienfertigung einfließen.

Weitere vorteilhafte Ausgestaltungen der Erfindung gemäß Anspruch 1 sind Gegenstand der abhängigen Ansprüche 2 bis 13.

Als eine vorteilhafte Ausgestaltung der Erfindung zur Schaffung einer wirksamen Sperre, die den Verstellbereich des Arbeitsexzenters definiert, schließt die Erfindung einen federkraftbeaufschlagten Stift, Halteknopf oder Druckknopf ein, der bei einer Lageübereinstimmung in ein Langloch des zugehörigen weiteren Bauteils verrastet. Der federkraftbeaufschlagte Stift ist dabei so gestaltet, dass dieser selbsttätig nach Lösen der Arretiereinrichtung formschlüssig in das Langloch eingreift. Der Halteknopf, Stift oder Druckknopf ist so gestaltet, dass dieser den Arbeitsbereich bzw. die Wirkungsweise des Arbeitsexzenters nicht beeinflusst und entsprechend spielbehaftet in dem Langloch geführt ist. Die Sperre ist danach ausschließlich zur Vermeidung von Extrempositionen des Arbeitsexzenters vorgesehen, die wie zuvor ausgeführt sich nachteilig auf den Zugmitteltrieb und die damit verbundenen Aggregate auswirkt.

Das kreisbogenartig gestaltete Langloch, das mit dem federkraftbeaufschlagten Stift oder Druckknopf zur Bildung einer Sperre zusammenwirkt, erstreckt sich über einen Winkel, der einen maximalen, für den Normalbetrieb vorgesehenen Verstellbereich des Arbeitsexzenters übertrifft. Diese Maßnahme stellt sicher, dass die Sperre ausschließlich nachteilige Extrempositionen des Arbeitsexzenters unterbindet.

Vorzugsweise ist die Sperre so angeordnet, dass der Haltestift dem Arbeitsexzenter und das Langloch der Schildplatte zugeordnet ist. Alternativ schließt die Erfindung ebenfalls eine umgekehrte Anordnung mit einem im Arbeitsexzenter angeordneten Langloch, in dem ein Stift geführt ist, der an der Schildplatte lagepositioniert ist.

Zur Ausgestaltung der Arretiereinrichtung ist erfindungsgemäß ein Haltestift vorgesehen, der in einem radial am Außenmantel des Arbeitszylinders angeordneten Butzen in einer Ausnehmung oder Bohrung eingesetzt ist und nach erfolgter Vormontage der Spannvorrichtung in eine korrespondierende Bohrung der Schildplatte verrastet. Das Handling des Haltestiftes wird vereinfacht, indem dessen Länge eine Breite der gesamten Spannvorrichtung übertrifft und endseitig abgewinkelt bzw. mit einer Öse versehen ist.

Zur Erzielung einer gedämpften Stellbewegung der Spannrolle ist der Arbeitsexzenter der Spannvorrichtung mit einer Dämpfungseinrichtung versehen, die eine separate, zwischen dem Arbeitsexzenter und einer drehstarr mit dem Tragkörper verbundenen Stützscheibe angeordnet ist. Alternativ dazu bietet es sich an, die in einem Ringspalt zwischen dem Arbeitsexzenter und dem Tragkörper eingesetzte Gleitlagerbuchse als Mehrfunktionsteil auszubilden. Dazu ist die Gleitlagerbuchse einstückig mit einem stirnseitig radial umlaufenden Bord versehen, der im eingebauten Zustand zwischen der Stirnseite des Arbeitsexzenters und der an dem Tragkörper lagefixierten Stützscheibe eingesetzt ist. Die Reibscheibe wird dabei von einer in axialer Richtung wirkenden Kraftkomponente der Torsionsfeder beaufschlagt. Die zwischen der Schildplatte und dem Arbeitsexzenter eingesetzte Torsionsfeder hat die weitere Aufgabe, zur Erzielung einer ausreichenden Vorspannung, mit einer Umfangskraft die Spannrolle kraftschlüssig an das Zugmittel zu beaufschlagen.

Zusätzlich oder alternativ schließt die Erfindung eine Dämpfungseinrichtung ein, bei der ein Reibelement zwischen dem Arbeitsexzenter und der Schildplatte angeordnet ist. Vorzugsweise ist das Reibelement in einem radial von dem Arbeitsexzenter und dem Tragkörper begrenzten Ringspalt eingesetzt. Eine definierte Reibkraft des Reibelementes wird mittels einer ebenfalls in dem Ringspalt eingesetzten Druckfeder erzielt, die das Reibelement axial kraftschlüssig an eine Reibfläche der Schildplatte andrückt. Die erfindungsgemäßen Dämpfungseinrichtungen sind getrennt oder gemeinsam einsetzbar zur gezielten Einflussnahme auf die Wirkungsweise des Arbeitsexzenters, um die von der Brennkraftmaschine ausgelöste Drehungleichförmigkeit, welche über die Kurbelwelle und der damit in Verbindung stehenden Riemenscheibe auf den Zugmitteltrieb übertragen wird, zumindest teilweise zu kompensieren bzw. zu dämpfen. Damit verbessert die erfindungsgemäße Spannvorrichtung die Lebensdauer des Zugmittels und optimiert die Geräuschentwicklung des Zugmitteltriebs, aufgrund verringerter Schwingungsamplituden und reduzierter Schwingungsfrequenz des Zugmittels.

Durch eine geeignete Werkstoffauswahl des Reibelementes, wozu sich insbesondere Kunststoff oder ein organisches Material eignet in Verbindung mit einer abgestimmten Federkraft, ergibt sich ein optimiertes Dämpfungsverhalten, das weiterhin durch eine definierte Reibradienauswahl beeinflusst werden kann.

Die Erfindung schließt außerdem eine Führungsscheibe ein, an der ein Federende der Torsionsfeder an der Schildplatte der Spannvorrichtung abgestützt ist. Die Führungsscheibe umfasst einen axial ausgerichteten Hülsenabschnitt, an dem ein Endabschnitt der Torsionsfeder geführt ist, wodurch eine Anlage der Federwindungen an dem Arbeitsexzenter vermieden wird und sich dadurch ein kontrolliertes Federmoment einstellt. Auf der vom Hülsenabschnitt abgewandten Seite bildet die Führungsscheibe zumindest einen Zentrierbutzen, der im eingebauten Zustand formschlüssig und damit drehstarr in eine Ausnehmung der Schildplatte eingepasst ist. Weiterhin ist die Führungsscheibe mit einer Rampe versehen, an der sich ein Federende der Torsionsfeder abstützt. Die Ausgestaltung der Führungsscheibe sieht eine spielbehaftete Anordnung zu dem Arbeitsexzenter vor, unabhängig von deren Position, wodurch keine unkontrollierte bzw. zusätzliche nachteilige Reibung zwischen diese Bauteilen auftritt.

Die zuvor beschriebene erfindungsgemäße Spannvorrichtung eignet sich in einer besonders günstigen Weise für das nachfolgend beschriebene Montageverfahren gemäß dem Anspruch 13. Die für dieses Verfahren vorgesehene Spannvorrichtung umfasst einen Aufbau mit folgenden Bauteilen bzw. Merkmalen:

Eine Schildplatte, die mit einem Zentrieransatz sowie einem Langloch versehen mit einem Tragkörper einstückig eine Einheit bildet; eine durch eine Zentralbohrung des Tragkörpers geführte Verschraubung, mit der die Spannvorrichtung ortsfest an einem Maschinenteil befestigt ist; einen begrenzt drehbar auf dem Tragkörper gelagerten Arbeitsexzenter, der außenseitig von einer Spannrolle umschlossen ist; eine zwischen dem Arbeitsexzenter und der Schildplatte eingesetzte Torsionsfeder; eine Dämpfungseinrichtung, die zwischen einem drehstarren Bauteil der Spannvorrichtung und dem Arbeitsexzenter angeordnet ist; sowie eine Arretiereinrichtung und eine Sperre zwischen dem Arbeitsexzenter und der Schildplatte.

Das erfindungsgemäße Verfahren zur Montage der Spannvorrichtung umfasst die folgenden Schritte:

Befestigen des Tragkörpers an der Schildplatte. Anschließend erfolgt ein axiales Aufschieben des Arbeitsexzenters einschließlich der Spannrolle, der Torsionsfeder, der Gleitlagerung sowie der Arretiereinrichtung auf den Tragkörper in einer Anordnung, in der die Torsionsfeder vorgespannt ist. Anschließend wird eine Sicherungsscheibe endseitig an dem Tragbolzen befestigt, an die sich der Arbeitsexzenter mittelbar oder unmittelbar axial abstützt. Nach einem Verdrehen des Arbeitsexzenters gegenüber der Schildplatte, entgegen der Kraft der Torsionsfeder bis in eine Vormontageposition, erfolgt mit Hilfe eines Haltestiftes eine Arretierung des Arbeitsexzenters gegenüber der Schildplatte. Zur Endmontage der erfindungsgemäßen Spannvorrichtung an einem Maschinenteil bzw. dem Gehäuse einer Brennkraftmaschine wird zunächst die Schildplatte mit dem Zentrieransatz in eine dafür vorgesehene Ausnehmung des Maschinenteils eingeführt, bevor die Befestigung mittels einer zentrisch im Tragkörper eingeführten Schraube erfolgt. Nach Lösen des Haltestiftes und Verschwenken des Arbeitszylinders aus der Vormontageposition in die Arbeitsstellung wird selbsttätig eine Sperre wirksam. Diese vorzugsweise aus einem in dem Arbeitszylinder integrierten, federbelasteten Haltestift, der formschlüssig in ein Langloch der Schildplatte eingreift, wird ein Verstellbereich des Arbeitsexzenters gegenüber der Schildplatte begrenzt. Vor dem Lösen des Haltestiftes der Arretiereinrichtung ist das Zugmittel auf den Riemenscheiben des Zugmitteltriebs aufgelegt, so dass bei einem Verschwenken des Arbeitsexzenters das Zugmittel selbsttätig vorgespannt wird.

### Kurze Beschreibung der Zeichnungen

Die Erfindung wird nachstehend anhand eines in insgesamt vier Figuren dargestellten Ausführungsbeispieles näher erläutert. Es zeigen:
- Figur 1: einen Längsschnitt durch eine erfindungsgemäße Spannvorrichtung;
- Figur 2: die Spannvorrichtung gemäß Figur 1 in einem weiteren Längsschnitt;
- Figur 3: die Spannvorrichtung gemäß den Figuren 1 und 2 in einer auf die Spannrolle gerichteten Perspektivansicht;
- Figur 4: die Spannvorrichtung in einer auf die Schildplatte gerichteten Perspektivansicht.

### Detaillierte Beschreibung der Zeichnungen

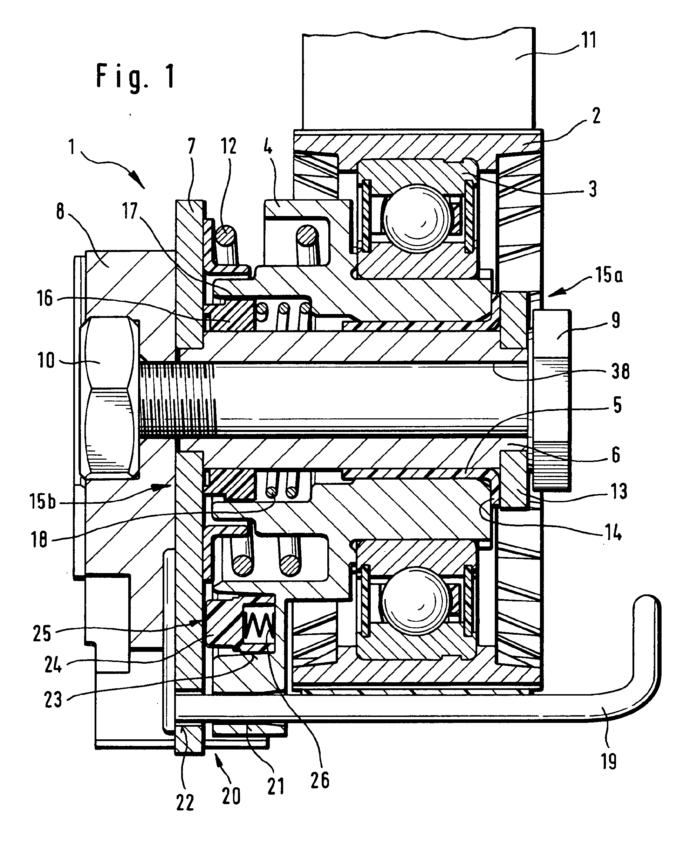

Bei der erfindungsgemäßen Spannvorrichtung 1 gemäß Figur 1 ist eine Spannrolle 2 über ein Wälzlager 3 außenseitig auf einem Arbeitsexzenter 4 gelagert. Der Arbeitsexzenter 4 ist über ein Gleitlager 5 auf einem Tragkörper 6 schwenkbar angeordnet, wobei der Tragkörper 6 an einer Schildplatte 7 fixiert ist und eine Bauteileinheit bildet. Die Schildplatte 7 dient zur Anlage an und zur Verdrehsicherung der gesamten Spannvorrichtung 1 gegenüber einem Maschinenteil 8, vorzugsweise einem Gehäuse einer in Figur 1 nicht abgebildeten Brennkraftmaschine. Zur Befestigung der Spannvorrichtung 1 dient eine in eine Zentralbohrung 38 des Tragkörpers 6 eingesetzte Verschraubung 9, die unmittelbar im Maschinenteil 8 oder einer separaten Gewindemutter 10 verschraubt ist.

Zur Erzielung einer kraftschlüssigen Abstützung bzw. Anlage der Spannrolle 2 an einem Zugmittel 11 ist zwischen der Schildplatte 7 und dem Arbeitsexzenter 4 eine Torsionsfeder 12 eingesetzt. Neben einer auf die Spannrolle 2 wirkenden Umfangskraft übt die Torsionsfeder 12 weiterhin eine Axialkraft aus, die den Arbeitsexzenter 4 in eine von der Schildplatte 7 abweichende Richtung beaufschlagt. Zur Abstützung der Axialkraft dient eine endseitig des Tragkörpers 7 angeordnete Sicherungsscheibe 13. Dabei stützt sich der Arbeitsexzenter 4 nicht unmittelbar an der Sicherungsscheibe ab sondern über einen einstückig mit dem Gleitlager 4 verbundenen Bord 14, der eine Dämpfungseinrichtung 15a bildet. Alternativ zu dem einstückig mit dem Gleitlager 5 verbundenen Bord 14 kann zur Schaffung der Dämpfungseinrichtung 15a eine separate Reibscheibe zwischen dem Arbeitsexzenter 4 und der Sicherungsscheibe 13 eingesetzt werden.

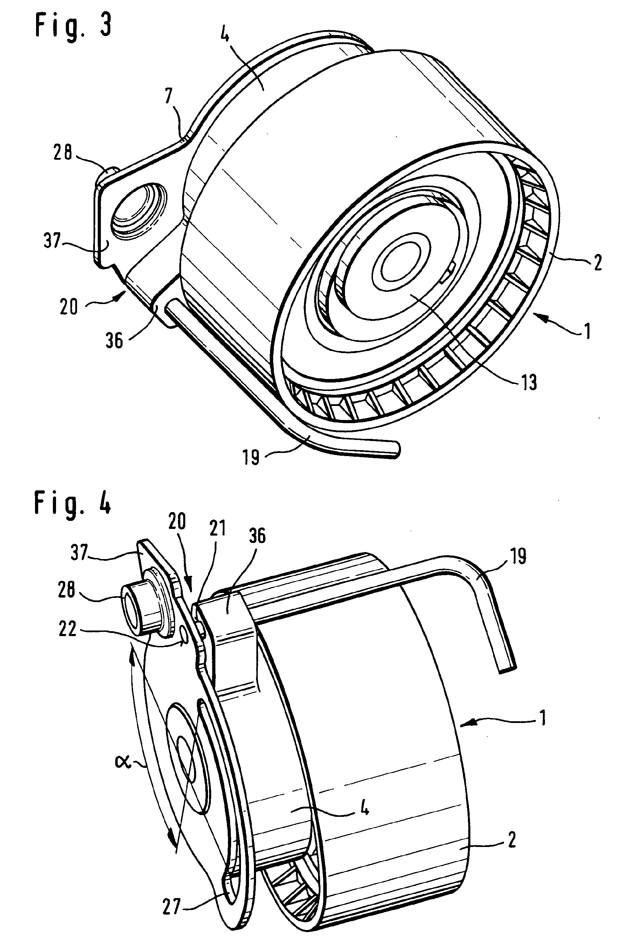

Die Spannvorrichtung 1 ist mit einer weiteren Dämpfungseinrichtung 15b versehen, bestehend aus einem Reibelement 16, das in einem radial von dem Tragkörper 6 und einer gestuften Innenwandung des Arbeitsexzenters 4 begrenzten Ringspalt 17 eingesetzt ist. Das mittels einer Schraubendruckfeder 18 an die Schildplatte 7 angepresste Reibelement 16 reduziert bzw. dämpft Schwenkbewegungen des Arbeitsexzenters 4 und kompensiert bzw. unterbindet nachteilige Schwingungen, was sich vorteilhaft auf die Schwingungsanregung des Zugmittels 11 und damit die Geräuschentwicklung des gesamten Zugmitteltriebs auswirkt. Die Figur 1 zeigt weiterhin eine Arretiereinrichtung 20, bei der in einer Lageübereinstimmung von jeweils einer Bohrung 21, 22 in dem Arbeitsexzenter 4 bzw. der Schildplatte 7 mittels eines Haltestiftes 19 der Arbeitsexzenter 4 nach einer Vormontage gegenüber der Schildplatte 7 arretierbar ist, zur Vereinfachung der Montage. Außerdem umfasst die Spannvorrichtung 1 eine Sperre 25, die im eingebauten Zustand der Spannvorrichtung 1 einen Schwenkbereich bzw. einen Freiheitsgrad des Arbeitsexzenters 4 gegenüber der Schildplatte 7 begrenzt. Dazu ist ein außermittig im Arbeitsexzenter 4 in einer Sacklochbohrung 23 eingesetzter Stift 24 vorgesehen, dem eine Druckfeder 26 zugeordnet ist, die gemeinsam einen Druckknopf bilden, der bei einer Lageübereinstimmung mit einem in Figur 4 abgebildeten Langloch 27 der Schildplatte 7 sich axial verschiebt, wobei ein Bogenmaß des Langlochs, der Winkel "α", den maximalen Verstellbereich des Arbeitsexzenters 4 definiert.

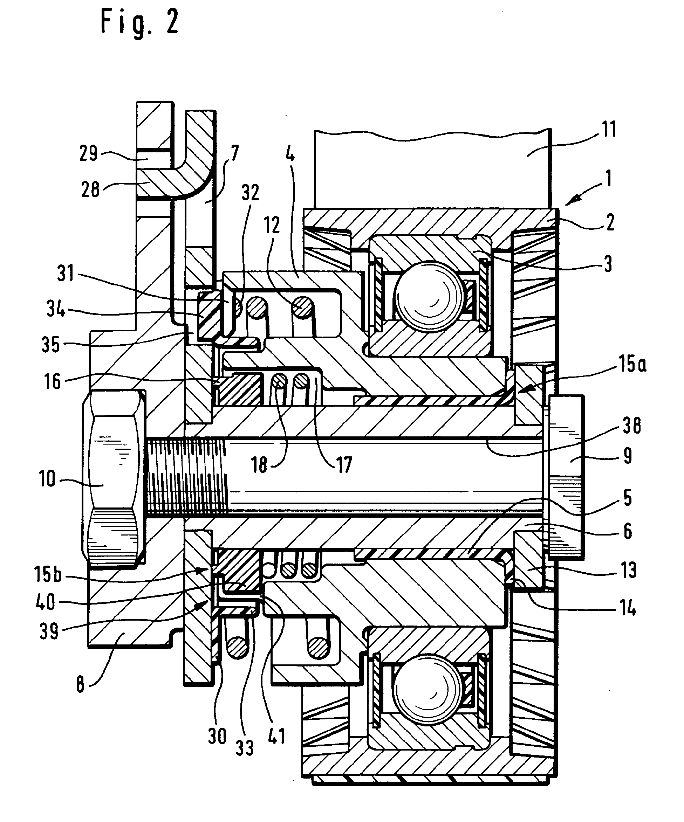

Die Figuren 2 bis 4 verdeutlichen die Spannvorrichtung 1 in einem weiteren Schnitt bzw. zwei Ansichten, wobei gleiche Bauteile mit übereinstimmenden Bezugszeichen versehen sind, zu deren Beschreibung auf die Beschreibung der Figur 1 verwiesen werden kann.

Figur 2 zeigt die lagefixierte Anordnung der Schildplatte 7 an dem Maschinenteil 8, mittels eines Zentrieransatzes 28, der in eine Ausnehmung 29 des Maschinenteils 8 eingepasst ist. Zur Erzielung einer verdrehgesicherten Abstützung der Torsionsfeder 12 an der Schildplatte 7 ist eine Führungsscheibe 30 vorgesehen, die eine Rampe 31 bildet, an der sich ein Federende 32 abstützt. Ein innerhalb der Torsionsfeder 12 verlaufender Hülsenabschnitt 33 der Führungsscheibe 30 verhindert eine das Reibmoment nachteilig beeinflussende Anlage der Torsionsfeder 12 an dem Arbeitsexzenter 4. Die Führungsscheibe 30 ist weiterhin mit zumindest einem Zentrierbutzen 34 versehen, der formschlüssig in eine Bohrung 35 der Schildplatte 7 eingepasst ist und damit eine wirksame Verdrehsicherung bildet. Die Figur 2 zeigt weiterhin eine zwischen dem Reibelement 16 und dem Arbeitsexzenter 4 vorgesehene Verdrehsicherung 39. Dazu ist das Reibelement 16 mit einem radialen Ansatz 40 versehen, der formschlüssig in eine schlitzförmige Ausnehmung 41 des Arbeitsexzenters 4 greift.

In den Figuren 3 und 4 ist die Spannvorrichtung 1 in verschiedenen Perspektiven dargestellt, die insbesondere die Anordnung der Arretiereinrichtung 20 verdeutlichen. Zur Führung des Haltestiftes 19 ist der Arbeitsexzenter 4 örtlich mit einem radial ausgerichteten Butzen 36 versehen, in dem die Bohrung 21 eingebracht ist. Die mit der Bohrung 21 des Arbeitsexzenters 4 korrespondierende Bohrung 22 ist in einem radial nach außen gerichteten Ansatz 37 der Schildplatte 7 vorgesehen. Ebenfalls ist der Zentrieransatz 28 der Schildplatte 7 im Bereich des Ansatzes 37 vorgesehen. Das Langloch 27 in der Schildplatte 7, in das im eingebauten Zustand der Spannvorrichtung 1 bzw. in dessen Arbeitsposition der in Figur 1 abgebildete Stift 24 formschlüssig eingreift zur Bildung der Sperre 25, ist kreisbogenförmig in die Schildplatte 7 eingebracht. Dabei erstreckt sich das Langloch 27 über einen Winkel "α", der den üblichen Arbeits- bzw. Schwenkbereich des Arbeitsexzenters 4 übertrifft. Die Sperrfunktion des Stiftes 24 bzw. der Sperre 25 tritt folglich erst in Funktion, wenn der zulässige Arbeitsbereich des Arbeitsexzenters 4 überschritten ist.

### Bezugszahlen

- 1: Spannvorrichtung
- 2: Spannrolle
- 3: Wälzlager
- 4: Arbeitsexzenter
- 5: Gleitlager
- 6: Tragkörper
- 7: Schildplatte
- 8: Maschinenteil
- 9: Verschraubung
- 10: Gewindemutter
- 11: Zugmittel
- 12: Torsionsfeder
- 13: Sicherungsscheibe
- 14: Bord
- 15a: Dämpfungseinrichtung
- 15b: Dämpfungseinrichtung
- 16: Reibelement
- 17: Ringspalt
- 18: Schraubendruckfeder
- 19: Haltestift
- 20: Arretiereinrichtung
- 21: Bohrung
- 22: Bohrung
- 23: Sacklochbohrung
- 24: Stift
- 25: Sperre
- 26: Druckfeder
- 27: Langloch
- 28: Zentrieransatz
- 29: Ausnehmung
- 30: Führungsscheibe
- 31: Rampe
- 32: Federende
- 33: Hülsenabschnitt
- 34: Zentrierbutzen
- 35: Bohrung
- 36: Butzen
- 37: Ansatz
- 38: Zentralbohrung
- 39: Verdrehsicherung
- 40: Ansatz
- 41: Ausnehmung

## Patentansprüche

1. Spannvorrichtung für Zugmittel, insbesondere Riemen, mit einer ortsfest an einem Maschinenteil (8) fixierten Schildplatte (7), an der ein Tragkörper (6) drehstarr befestigt ist, auf dem ein gegen eine Federkraft einer Torsionsfeder (12) begrenzt verdrehbarer Arbeitsexzenter (4) gelagert ist, der mit einer drehbaren, den Arbeitsexzenter (4) konzentrisch umschließenden, an dem Zugmittel (11) abgestützten Spannrolle (2) verbunden ist sowie zwischen dem Arbeitsexzenter (4) und einem drehstarren Bauteil der Spannvorrichtung (1) zumindest eine Dämpfungseinrichtung (15a, 15b) vorgesehen ist, wobei nach einer Vormontage eine Arretiereinrichtung (20) den Arbeitsexzenter (4) gegenüber der Schildplatte (7) fixiert und in einer Einbaulage der Spannvorrichtung (1) eine Sperre (25) einen Schwenkbereich des Arbeitsexzenters (4) gegenüber der Schildplatte (7) begrenzt.

2. Spannvorrichtung nach Anspruch 1, wobei als Sperre (25) der Arbeitsexzenter (4) oder die Schildplatte (7) einen federkraftbeaufschlagten Stift (24) aufweist, ausgebildet als ein Druckknopf, der in ein Langloch (27) des zugehörigen weiteren Bauteils bei einer Lageübereinstimmung verrastet.

3. Spannvorrichtung nach Anspruch 2, wobei das kreisbogenartig gestaltete Langloch (27) sich über einen Winkel "α" erstreckt, der einen maximalen Schwenk- bzw. Verstellbereich des Arbeitsexzenters (4) in einem Normalbetrieb übertrifft.

4. Spannvorrichtung nach Anspruch 2, wobei zur Bildung der Sperre (25) der federkraftbeaufschlagte Stift (24) dem Arbeitsexzenter (4) und das Langloch (27) der Schildplatte (7) zugeordnet ist.

5. Spannvorrichtung nach Anspruch 2, wobei zur Bildung der Sperre (25) der Schildplatte (7) der federkraftbeaufschlagte Stift (24) und das Langloch (27) in dem Arbeitsexzenter (4) eingebracht sind.

6. Spannvorrichtung nach Anspruch 1, deren Arbeitsexzenter (4) gegenüber der Schildplatte (7) nach erfolgter Vormontage durch die Arretiereinrichtung (20) lagefixiert sind und dazu ein in dem Arbeitsexzenter (4) eingesetzter Haltestift (19) in eine Bohrung (22) der Schildplatte (7) verrastet.

7. Spannvorrichtung nach Anspruch 1, wobei zur Bildung der Dämpfungseinrichtung (15a) ein zwischen dem Tragkörper (6) und dem Arbeitsexzenter (4) eingesetztes Gleitlager (5) endseitig einstückig mit einem radial umlaufenden Bord (14) versehen ist, der im eingebauten Zustand zwischen dem Arbeitsexzenter (4) und einer am Tragkörper (6) fixierten Sicherungsscheibe (13) angeordnet, die Funktion einer Reibscheibe übernimmt.

8. Spannvorrichtung nach Anspruch 1, wobei als Dämpfungseinrichtung (15a) eine separate Reibscheibe vorgesehen ist, die zwischen dem Arbeitsexzenter (4) und der an dem Tragkörper (6) fixierten Sicherungsscheibe (13) eingesetzt ist.

9. Spannvorrichtung nach Anspruch 1, wobei zur Bildung der Dämpfungseinrichtung (15b) ein Reibelement (16) zwischen dem Arbeitsexzenter (4) und der Schildplatte (7) eingesetzt ist.

10. Spannvorrichtung nach Anspruch 9, deren Reibelement (16) in einem radial von dem Tragkörper (6) und einer gestuften Innenwandung des Arbeitsexzenters (4) begrenzten Ringspalt (17) angeordnet ist, und das mittels einer Schraubendruckfeder (18) kraftschlüssig an der Schildplatte (7) abgestützt ist.

11. Spannvorrichtung nach Anspruch 10, wobei zwischen dem Arbeitsexzenter (4) und dem Reibelement (16) eine Verdrehsicherung (39) vorgesehen ist.

12. Spannvorrichtung nach Anspruch 1, deren Torsionsfeder (12), die zwischen der Schildplatte (7) und dem Arbeitsexzenter (4) eingesetzt ist, mit einem ersten Federende an dem Arbeitsexzenter (4) fixiert ist und deren zweites Federende (32) an einer Rampe (31) einer an der Schildplatte (7) drehfixierten Führungsscheibe (30) abgestützt ist.

13. Spannvorrichtung nach Anspruch 12, wobei die Führungsscheibe (30) mittels eines axial ausgerichteten Hülsenabschnittes (33) einen Endabschnitt der Torsionsfeder (12) führt und weiterhin zumindest einen entgegengesetzt zu dem Hülsenabschnitt (33) axial ausgerichteten formschlüssig in eine Bohrung (35) der Schildplatte (7) eingreifenden Zentrierbutzen (34) aufweist.

14. Verfahren zur Montage einer Spannvorrichtung (1), für ein Zugmittel (11) eines Zugmitteltriebs an einer Brennkraftmaschine mit folgendem Aufbau:
- eine mit einem Zentrieransatz (28) sowie einem Langloch (27) versehene Schildplatte (7), die mit einem Tragkörper (6) einstückig verbunden ist;
- eine durch eine Zentralbohrung (38) des Tragkörpers (6) geführte Verschraubung (9), mit der die Spannvorrichtung (1) ortsfest an einem Maschinenteil (8) befestigt ist;
- einen auf dem Tragkörper (6) begrenzt schwenkbar gelagerten Arbeitsexzenter (4), der von einer wälzgelagerten Spannrolle (2) umschlossen ist;
- eine zwischen dem Arbeitsexzenter (4) und der Schildplatte (7) eingesetzte Torsionsfeder (12);
- eine Dämpfungseinrichtung (15a, 15b), die zwischen einem drehstarren Bauteil der Spannvorrichtung (1) und dem Arbeitsexzenter (4) angeordnet ist;
- eine Arretiereinrichtung (20) sowie eine Sperre (25) zwischen dem Arbeitsexzenter (4) und der Schildplatte (7);
Die Vormontage erfolgt in den Schritten:
- Befestigen des Tragkörpers (6) an der Schildplatte (7);
- axiales Aufschieben des Arbeitsexzenters (4), einschließlich der Spannrolle (2), des Gleitlagers (5) und der Arretiereinrichtung (20) auf den Tragkörper (6) in einer Anordnung, in der die Torsionsfeder (12) vorgespannt ist;
- Fixieren einer Sicherungsscheibe (13) an dem Tragkörper (6), an der sich der Arbeitsexzenter (4) axial abstützt;
- Verdrehen des Arbeitsexzenters (4) in die Vormontageposition, die durch einen den Arbeitsexzenter (4) und die Schildplatte (7) verbindenden Haltestift (19) gesichert ist;
Die Endmontage der Spannvorrichtung (1) erfolgt in den Schritten:
- Anflanschen der Schildplatte (7), wobei deren Zentrieransatz (28) formschlüssig in eine Ausnehmung (29) des Maschinenteils (8) eingepasst ist;
- Befestigung der Spannvorrichtung (1) mittels der Verschraubung (9) an dem Maschinenteil (8);
- Lösen des Haltestiftes (19), wodurch die Torsionsfeder (12) eine selbsttätige Verdrehung des Arbeitsexzenters (4) auslöst, bei der synchron dazu eine zwischen dem Arbeitsexzenter (4) und der Schildplatte (7) angeordnete Sperre (25) wirksam wird, die den Schwenkbereich des Arbeitsexzenters (4) begrenzt.
